# EUROPEAN PATENT APPLICATION

(11) **EP 3 395 930 A1**
(43) Date of publication of application: **31.10.2018**
(21) Application number: 16879498.0
(22) Date of filing: 10.05.2016
(51) Int. Cl.: C10L 11/06, B27M 1/08

(54) **SLOW-BURNING LOG**

(30) Priority: 21.12.2015 UA 201512604
(71) Applicant: Ilin, Viktor Eduardovych, Kyiv 04212 (UA)
(72) Inventor: Ilin, Viktor Eduardovych, Kyiv 04212 (UA)
(74) Representative: Straube, Urs Norman
(86) International application number: PCT/UA2016/000055
(87) International publication number: WO 2017/111763

(57) **Abstract**

The invention relates to warming, heating devices for warming and cooking, and it can be utilized in household, in the field, in camping and in any touristic events as a source of stand-alone flame for warming, cooking, as well as for illumination. A slow-burning log that is made of a solid-fuel material of a vegetable origin has upper, lower and side surfaces, at least two vertical through incisions that extend from the upper surface to the lower one and intersect with each other thereby forming a general through vertical hole that begins in a midsection of the upper surface. The vertical through incisions are made as partially inner incisions, and beginning from the upper surface they do not extend to the side surface of the log, while in the lower section of the log they extend to the side surface thereby forming side entrances for air delivery on the side surface. The vertical through incisions are made in a shape of trapezoid or rectangular grading into the trapezoid or a rectangular grading into another rectangular or in any other shape or in the form of any figure. The side entrances are made with dimensions calculated with consideration of air volume that is delivered there through and required to maintain uniform stable burning process. The slow-burning log comprises an ignition agent arranged at least in the general vertical through hole. The slow-burning log may be made with a removable support for a reservoir for cooking. The slow-burning log is made with a handle. Technical effect lies in increase of the burning time, provision of uniform long-term burning, provision of uniform cooling of the log body along the entire perimeter of the vertical through incisions while also providing uniform delivery of air from the bottom to the vertical through incisions along the entire perimeter thereof in order to provide stability of the burning temperature and uniform gradual burning of the log, allowing adjustment of the burning process providing slowing down thereof, increase of fabricability, reduction of labor intensity of production.

## Description

The invention relates to warming, heating devices for warming and cooking, and it can be utilized in household, in the field, in camping and in any touristic events as a source of stand-alone fire for warming, cooking, as well as for illumination.

A device for cooking is known comprising a body made from a combustible material that allows using it both as a fuel and as a device for combustion thereof, which is implemented due to a presence of at least two intersecting vertical slotted passages in the body, the passages having a common intersection line inside the body, the line being close to a middle portion of upper base thereof, wherein length, weight and height of the vertical slotted passages is dictated by a possibility of a process of slow burning of inner surfaces of the body forming the vertical slotted passages, wherein burning-out of the device is accompanied by forming mounts, which support a reservoir for cooking. [see patent RU 2280213(C2) from the class IPC6 F24B3/00, C10L9/00, published on 20.02.2006].

Drawbacks of said technical solution, when it is made with the vertical slotted passages in the form of at least two diametrical incisions, which extend to the side surface of the device and go down almost to the lower surface thereof, but they do not extend there through, lie in rapid combustion of separate surfaces due to rapid fire propagation to the side surfaces of the device, non-uniform and incomplete combustion of the device: incomplete combustion of the lower base thereof, expedited deformation and breaking down of the device part made with the vertical slotted passages, which are distributed to the side surface, into parts with their incomplete combustion and inability to allow adjustment of the burning process providing slowing-down thereof.

Making the diametrical incisions provides free access for air to the burning zone that expedites deformation of both side and directly upper surfaces and leads to rapid withdrawal of the device from operation. Furthermore, due to opened and free access for air to the burning zone it becomes impossible to change the intensity of gas exchange inside the diametrical incisions, and, thus, a process of cooling the burning zone that could slow down the burning process becomes impossible.

Besides, absence of a ventilation holes does not allow adjustment of light and heat output of the flame.

In the embodiment of the known device having the vertical slotted passages in the form of incisions, which do not distribute to the side surface of the body, delivery of oxygen to the burning zone becomes significantly complicated and it becomes reasonable to dispose the device at a certain height over a solid surface, e.g. over a ground, while providing free access for air from the bottom to the incisions, since there are no side ventilation holes for oxygen supply to the burning zone that causes using an additional device, e.g. a support, that contributes to inconvenience during use. At the same time, a possibility of uniform cooling of the burning zones providing increase of the burning duration is not provided. Besides, the general hole formed at the intersection of the slotted passages extends in the course of combustion that leads to entry of a high air volume to the burning zone that, in turns, leads to acceleration of combustion of the known device.

A log for producing fire is known, the log being a billet from a whole dry round timber, which has a through passage along the axis and diametrical incisions on the billet height that do not reach the base for the length of 20 mm, and in the upper and lower parts of the billet on the centre cone depressions are made and in the lower part - through-holes on the height of 10...15 mm from the base, which pass through the central passage [see patent of Ukraine No. 82202 from the class IPC13 B27M 1/00, published on 25.07.2013 in the Bul. No. 14].

Drawbacks of said device are due to its structural design with diametrical incisions on the height of the billet that do not reach the base and distribute to the side surface of the device. This leads to rapid combustion of separate surfaces due to rapid fire propagation to the side surfaces of the device, non-uniform and incomplete combustion of the device: incomplete combustion of the lower base thereof, expedited deformation and breaking down of the device part made with the vertical slotted passages, which are distributed to the side surface, into parts with their incomplete combustion and inability to allow adjustment of the burning process providing slowing-down thereof.

Making the diametrical incisions provides free access for air to the burning zone that expedites deformation of both side and directly upper surfaces and leads to rapid withdrawal of the device from operation.

Further drawback that is associated with making through-holes on the height of 10...15 mm from the base in the device lies in a high labor intensity of the process for making the device and in a need of additional production operations and equipment. Furthermore, entry of the air to the diametrical incisions through the through-holes reduces efficiency of the process of cooling the burning zone, since they are connected only with the central passage within the billet.

The closest analogue, according to essential features thereof, is a disclosed compact log having a longitudinal extent from end-to-end, a midsection, a lower section and a side surface, wherein the compact log comprises a plurality of longitudinally extending end-to-end through incisions, which extend from the lower surface of the log and intersect in the midsection of the log and fail to extend to the side surface of the log, and an air duct in the lower part of the log that extends from the side surface of the log to the midsection of the log and fail to extend to the upper section of the log in order to prevent burning of the side surface of the log; wherein the air duct is made in the form of a groove and radially displaced from the incisions such that the air duct intersects the incisions only in the midsection of the log that is adjacent to the lower surface of the log [see patent US8597381(B2), class IPC6 C10L 11/06, published on 06.12.2012].

A drawback of said technical solution lies in a high labor intensity of the process for making the device while performing additional technological operations and in a need of additional equipment for making a separate air duct on the lower surface of the log.

Also the major drawback of the structure lies in making the air duct in the form of a separate groove on the lower surface of the log with a radial displacement from the longitudinally extending through incisions, the groove being communicated only with the midsection, wherein the incisions are intersected, that does not allow delivery of air to other parts of the incisions, which could cool the log body and reduce the burning intensity, that does not provide increase of heating time of the log body in other sections of the incisions and, thus, does not provide increase of burning duration of the log due to this fact. Furthermore, when making the longitudinally extending through incisions and the air duct in such a way and when disposing the device on a solid surface, e.g., ground or the like, delivery of sufficient amount of air to the midsection, wherein the incisions are intersected, is not provided due to absence of a sufficient draft that causes use of a support for the device in order to provide air access directly to the longitudinally extending through incisions on the lower surface of the log. However in this case it is impossible to adjust the air volume that is delivered to the longitudinally extending through incisions and, thus, to adjust the burning process in order to increase the burning time, besides, the general hole formed at the intersection of the longitudinally extending through incisions extends in the course of combustion that leads to entry of a high air volume to the burning zone that, in turns, leads to acceleration of combustion of the known device that increases the burning intensity and reduces the burning duration of the known device as well as makes it impossible to limit the air flow that is delivered to the combustion zone.

The proposed invention is aimed to provide a novel, effective, technological slow-burning log having improved characteristics by changing a structure and by making the structure elements in a novel way.

This aim is achieved due to the fact that in the slow-burning log made of a solid-fuel material of a vegetable origin, the log having an upper surface, a lower surface, a side surface, at least two vertical through incisions that extend from the upper surface to the lower one and intersect with each other thereby forming a general through vertical hole that begins in a midsection of the upper surface, according to the invention, the vertical through incisions are made as partially inner incisions, and beginning from the upper surface they do not extend to the side surface of the log, while in the lower section of the log they extend to the side surface thereby forming side entrances for air delivery on the side surface.

According to the proposed technical solution, the vertical through incisions may be made in a shape of trapezoid or rectangular grading into the trapezoid or a rectangular grading into another rectangular or in any other shape or in the form of any figure.

Also according to the invention, the side entrances are made with dimensions calculated with consideration of air volume that is delivered there through and required to maintain uniform stable burning process.

Also according to the invention, the slow-burning log may comprise an ignition agent mounted in the general vertical through hole.

Also according to the invention, walls of the vertical through incisions may be soaked with a highly flammable substance.

Also according to the invention, the proposed device may have a handle for convenient transportation thereof, the handle being fixed thereon and may be arranged on the side of both the upper surface and the side or the lower surface.

An additional support may be used along with the slow-burning log, the support is to be arranged on the upper surface of the log for placing a cooking reservoir thereon.

The proposed device is made of a solid-fuel material of a vegetable origin, preferably, of a natural dry round timber, and it may be in the form of a sawed-off tree trunk portion mounted vertically.

Technical effect lies in increase of the burning time, provision of uniform cooling of the log body along the entire perimeter of the vertical through incisions while also providing uniform delivery of air from the bottom to the vertical through incisions along the entire perimeter thereof in order to maintain the burning process providing stable combustion temperature and uniform moderate burning of the log from top to bottom, allowing adjustment of the burning process providing slowing down thereof, elimination of a need to provide air delivery from the bottom and, thus, elimination of a need to use an additional facility to allow air delivery from the bottom of the log, as well as in elimination of uncontrolled access of the high air volume from the bottom during gradual burning-out of the midsection with the corresponding extension of the central through hole that usually leads to acceleration of the combustion of the known analogues.

The set of said essential features of the proposed technical solution provides reduction of labor intensity and increase of production fabricability of the device due to reduction of the structure elements and number of technological operations.

In the claimed invention, a system for air supply to the burning zone is improved due to making uniformly arranged ventilation passages in the form of vertical through incisions, which, when extended to the side surface, form side entrances for air delivery, in the lower section of the log, through which the air is delivered from at least four sides of the log directly to the vertical through incisions and along the entire perimeter thereof that provides stable combustion temperature and uniform moderate burning, increases burning time of the proposed device, eliminates deformation of the upper surface. Besides, designing the device with the proposed structure allows adjustment of light and heat output due to a possibility of sealing of a portion of the side entrances.

Also the set of essential features provides increase of usability eliminating a need in use of a specific support to provide air access from the bottom of the log.

Cause-and-effect relationship between essential features and technical effect lies in that making of the vertical through incisions in the proposed form, i.e. partially internal, that does not extend to the side surface of the log beginning from the upper surface, while in the lower section it extends to the side surface thereby forming side entrances on the side surface for air delivery, in contrast to the closest analogue, in the set of essential features allows creation of preconditions for effective air delivery to the combustion zone through the formed side entrances, which are ventilation holes or gaps according to the embodiment and form ventilation passages, and its uniform distribution within the entire ventilation passage, while not making the production process more complex, since it is no more required to perform additional production actions as to forming a separate ventilation passage or other ventilation holes for air supply to the vertical through incisions. At the same time, the claimed structure achieves provision of cooling the inner surfaces of the vertical through holes along the entire perimeter thereof by the air being delivered, while also providing delivery of the air volume defined and limited by dimensions of the side entrances required to maintain uniform stable burning process that leads to increase of burning duration, while keeping consistency of the log.

There are at least four side entrances made for air delivery, which are side ventilation holes or gaps according to the embodiment, in contrast to the air passage of the closest analogue, which provide immediate direct air delivery to the vertical through incisions, that generally allows slowing down the burning process of the device, increase of usage time and adjustment of light and heat output. It becomes possible due to the process of internal cooling of the device. Air having lower temperature in comparison with the temperature of the burning zone is delivered through the side ventilation holes/gaps to the vertical through incisions and reduces the burning intensity while cooling the burning zone.

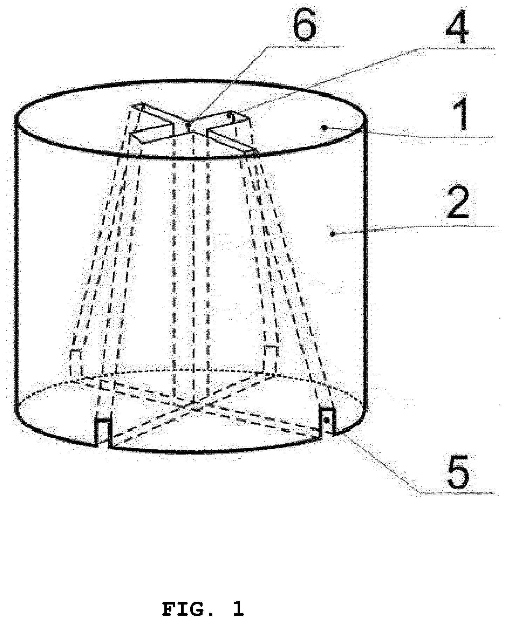

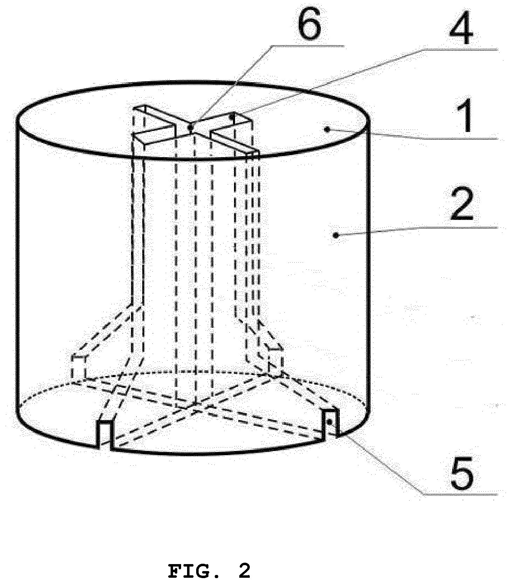

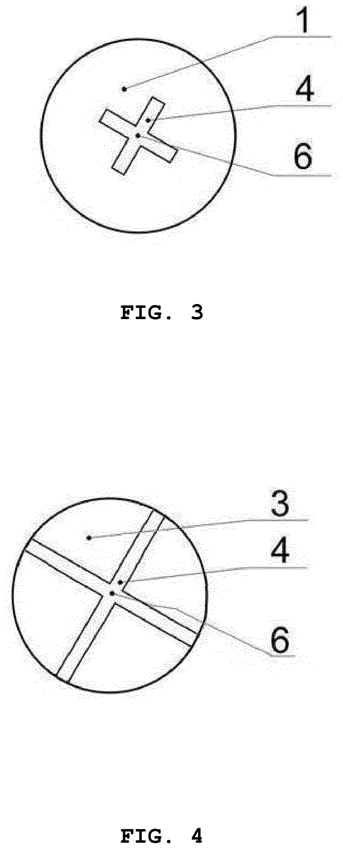

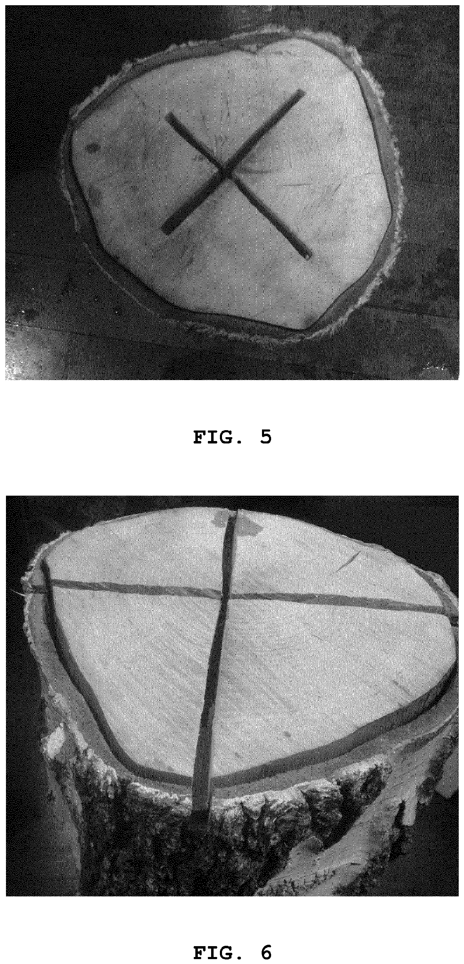

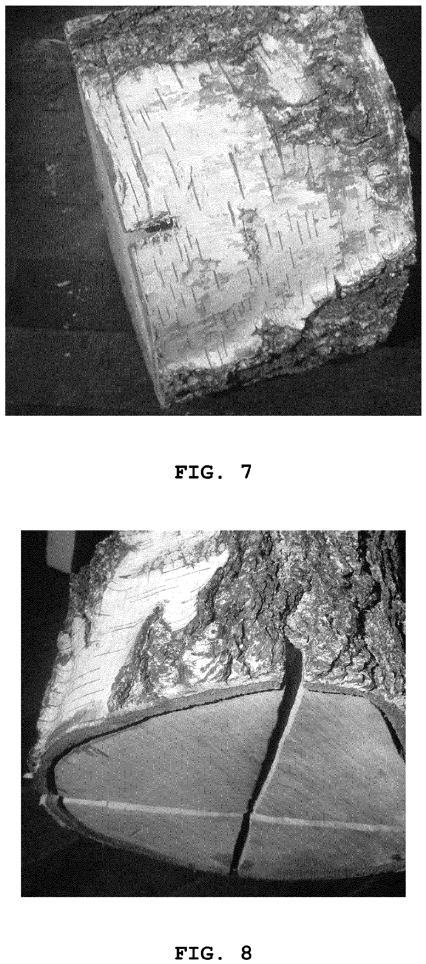

The essence of the claimed technical solution will be explained below referring to the illustrative material, which presents: fig. 1 - an overall view of the slow-burning log with the embodiment of the vertical through holes in the shape of trapezoid; fig. 2 - an overall view of the slow-burning log with the embodiment of the vertical through holes in the complex shape; fig. 3 - a top view of the slow-burning log; fig. 4 - a bottom view of the slow-burning log; figs. 5, 6, 7, 8 - examples of embodiments of the slow-burning log: fig. 5 - a top view, fig. 6 - a bottom view, fig. 7 - a side view, fig. 8 - a fragment of the overall bottom view.

The proposed slow-burning log comprises: upper surface 1; side surface 2; lower surface 3; vertical through incisions 4, which are partially, preferably in the upper and middle section of the log, made internal, i.e. such that they do not extend to the side surface of the log beginning from the upper surface, while they are made opened in the lower section of the log, extend to the side surface forming side entrances 5 for air delivery on the side surface 2. The side entrances 5 represent a portion of the vertical through incisions, continuation thereof and at the same time they represent ventilation holes or gaps 5 depending on the way they are made relative to the lower surface: holes in case of making them without intersection with the lower surface, and gaps in case of coupling with the lower surface. Dimensions of the side entrances are calculated with consideration of the air volume required to maintain uniform stable burning process that is caused by a number and dimensions of the vertical through incisions, overall dimensions of the log in general.

The vertical through incisions 4, when intersecting, form a general through vertical hole 6. The vertical through incisions 4, if there are two of them made, intersect in the midsection of the log, preferably at right angle. If the log has a regular round shape, the central longitudinal axis of the general through hole 6 may coincide with the central longitudinal axis of the log. When the log is made with three or more vertical through incisions 4, they are distributed uniformly, while intersecting approximately at equal angles. In this case the side entrances are distributed along perimeter of the side surface in the lower section of the log.

The claimed device may comprise the vertical through incisions 4 having various shape and dimensions depending on the shape and dimensions of the upper surface, side surface and lower surface, as well as on prospective operating conditions.

The claimed slow-burning log may be made with a handle for convenient use.

Furthermore, the slow-burning log may comprise an ignition agent mounted in the general vertical through hole and/or walls of the vertical through incisions may be soaked with a highly flammable substance for rapid ignition.

The proposed slow-burning log is used preferably in any touristic events and in campings, as well as in fireplaces as a source of stand-alone fire for warming, cooking or as a source for illumination in the following way.

The slow-burning log is arranged with its lower surface 3 on another surface. The ignition agent arranged in the general through hole or a wick of this agent extending there from is scorched. Afterwards, gradual uniform slow inflammation of the slow-burning log occurs.

Air that cools the walls of the vertical through incisions 4 and allows maintaining stable slowed down burning process is delivered to the vertical through incisions 4 through the side entrances 5, which are uniformly arranged along the perimeter of the side surface 2 in the lower section of the log. In this case, it is provided that air is sufficiently supplied through the side entrances 5 along the uniformly distributed ventilation passages to the burning zone to maintain stable fire, the passages not changing the dimension thereof up to almost complete combustion of the log, in contrast to other known devices, that provides stability, increased burning duration of the claimed device. By sealing the side entrances 5 with supplementary means, the air delivery volume to the burning zone and thus the burning intensity, light and heat output of the slow-burning log is adjusted, if necessary, e.g., at strong wind.

After scorching the slow-burning log, it is possible to arrange the reservoir suitable for cooking and/or warming water on the upper surface 1. In case when the vertical through incisions 4 on the upper surface are completely sealed due to high dimension of the reservoir for cooking, it is necessary to use a support for arranging the reservoir at a distance from the upper surface 1 in order to prevent fire from fading out.

Preferably, the slow-burning log is made from timber. Various wood species are used, preferably, birch.

It has been experimentally established that making the vertical through incisions, according to the claimed structural solution being proposed, leads to increase of the burning time of the device, since such structure allows uniform distribution of air that is delivered through the side entrances to the vertical through incisions along the inner walls of the vertical through incisions while cooling them in order to slow down the burning process and simultaneously maintaining the burning process providing stability thereof, as well as cause long-term perseverance of integrity of the device in view of causing slowed down and gradual combustion of the inner walls of the vertical through incisions.

Upon comparison of the proposed technical solution with the analogues known from the prior art, it is concluded that the slow-burning log meets the criterion of "inventive step", since it is presented with qualitative structural changes of making the vertical through incisions thereby producing the ventilation system of air supply to the burning zone that provides achievement of said technical effect being not established in the existing prior art earlier.

Structures of the slow-burning log having the claimed set of essential features have not been revealed from existing sources of patent and scientific and technical information, thus, the presented technical solution meets the criterion of "novelty".

Also according to the results of experimental practice examination, the proposed technical solution is suitable for use, since it does not contain any materials, which could not be reproduced at the actual science and engineering development stage, therefore, the present technical solution is considered to be compliant with the criterion of "industrial applicability".

## Claims

1. A slow-burning log made of a solid-fuel material of a vegetable origin, the log having upper, lower and side surfaces, at least two vertical through incisions that extend from the upper surface to the lower one and intersect with each other thereby forming a general through vertical hole that begins in a midsection of the upper surface, **characterized in that** the vertical through incisions are made as partially inner incisions, and beginning from the upper surface they do not extend to the side surface of the log, while in the lower section of the log they extend to the side surface thereby forming side entrances for air delivery on the side surface.

2. The slow-burning log according to claim 1, **characterized in that** the vertical through incisions are made in a shape of trapezoid or rectangular grading into the trapezoid or a rectangular grading into another rectangular or in any other shape or in the form of any figure.

3. The slow-burning log according to claim 1, **characterized in that** the side entrances are made with dimensions calculated with consideration of air volume that is delivered there through and required to maintain uniform stable burning process.

4. The slow-burning log according to claim 1, **characterized in that** it comprises an ignition agent arranged at least in the general vertical through hole.

5. The slow-burning log according to claim 1, **characterized in that** it is made with a removable support for a reservoir for cooking.

6. The slow-burning log according to claim 1, **characterized in that** it is made with a handle.
